# EUROPEAN PATENT SPECIFICATION

(11) **EP 0 235 822 B1**
(45) Date of publication and mention of the grant of the patent: **02.06.1993**
(21) Application number: 87103173.8
(22) Date of filing: 06.03.1987
(51) Int. Cl.: G01S 15/89, G01S 7/62, G06F 15/68

(54) **Apparatus for forming flow-map images using two-dimensional spatial filters**
Einrichtung zur Formung von Abbildungen einer Strömungskarte mittels eines zweidimensionalen Raumfilters
Appareil de formation d'images de traçage d'un écoulement utilisant des filtres spatiaux à deux dimensions

(30) Priority: 06.03.1986 US 836800
(43) Date of publication of application: 09.09.1987
(73) Proprietor: Hewlett-Packard Company, Palo Alto, California 94304 (US)
(72) Inventor: Hunt, Barry F., Nashua, NH 03062 (US); D'Sa, Alwyn P., Cambridge, MA 02142 (US); Magnin, Paul A., Andover, MA 01810 (US)
(74) Representative: Liesegang, Roland, Dr.-Ing.

(56) References cited:
- EP-A- 0 045 596
- EP-A- 0 100 094
- EP-A- 0 158 920
- DE-A- 3 321 269
- FR-A- 2 556 902
- PROCEEDINGS OF THE CONFERENCE ON PATTERN RECOGNITION AND IMAGE PROCESSING, Chicago, Illinois, 31st May - 2nd June 1978, pages 137-141, IEEE, New York, US; P.M. NARENDRA: "A separable median filter for image noise smoothing"
- PROCEEDINGS OF THE IEEE INTERNATIONAL CONFERENCE ON ACOUSTICS, SPEECH, AND SIGNAL PROCESSING, Tampa, Florida, 26th-29th March 1985, vol. 3, pages 997-1000, IEEE, New York, US; A. KUNDU et al.: "VLSI implementation of two-dimensional generalized mean filter"

## Description

Data values are often provided at the intersections of coordinates of one type with coordinates of another type, e.g., the intersections of radial coordinates with arc coordinates, or the intersections of x coordinates with y coordinates. If the data values are reliable, they can be used to form an image; but if they are not reliable, as where there is a low signal-to-noise ratio, where there are "drop-outs" when no data value is provided, or where there are singular or odd data values for various reasons, an image formed from these actual data values can have a very poor quality. Instead of using the raw data values at the coordinate intersections, it has been proposed e.g. By EP-0 158 920 for determining a grey scale value to be assigned to each selected display pixel of human tissue that a display data value be derived for each intersection by using an arithmetic average of adjacent data values that may or may not be weighted; but this does not solve the problem because one maverick data value can have a great effect on the average.

A situation of the type referred to is encountered in the formation of two-dimensional maps of the turbulence and velocity of blood flow in the circulation system of a patient because the signal-to-noise ratio is poor and because of implementation errors of some apparatus that produce no signal at all if the signals are too weak. Furthermore, the velocity signals are really estimates derived from Doppler shift frequencies, and since they are usually sampled, aliasing may occur so that what is actually a large positive velocity can appear as a large negative velocity. Thus, if positive velocity is illustrated by one color and negative velocity by another, as it is known from EP-0 100 094 A2 small areas of one color may appear in large areas of the other. As such changes in velocity are not likely to occur, the image is not a true representation of the action taking place.

In accordance with the invention which is defined in claim 1, data values located at the intersections of a plurality of coordinates of one type with coordinates of another type are used to derive a display data value to be used at an intersection near or at the middle of the intersections. This can be effected by selecting from the data values along each coordinate of one type that data value which is greater than a first given number of the data values at those intersections and less than a second given number of the data values at the intersections. Then the selected data value that is greater than a third given number of selected data values and less than a fourth given number of selected data values is chosen as the display data value. If the first and second given numbers are the same, the selected data values along the one type of coordinate are the median values; and if the third and fourth numbers are the same, the chosen selected value is the median of the selected data values.

The numbers of each coordinate need not be equal. If an odd number of each type of coordinate are used, the chosen one of the selected data values can be displayed at the intersection of the center coordinates of each type. If an odd number of a first type of coordinate and an even number of coordinates of a second type are used, the chosen one of the selected data values can be displayed at the intersections of the two innermost of the second type with the center coordinate of the first type; and if an even number of each type of coordinates is used, the chosen one of the selected data values can be displayed at any one of the four intersections of the two innermost coordinates of each type. In fact, the selected data value chosen for display can be displayed at any of the data values used in the selection process.

Practical considerations limit the numbers of coordinates that are used. If the numbers are too large, meaningful detail will be lost. Good results have been attained with three coordinates of each type.

The effect of this method of selecting data values for display is to eliminate specular "odd" values and "drop-outs". Unlike an arithmetic weighted sum, which is affected by specular values and drop-outs, the selected values of this invention completely ignore them since it always picks a value between the largest and the smallest.
FIGURE 1 illustrates the application of the invention to data samples located at the intersections of radial and angular coordinates;
FIGURE 2 is a block diagram of a system incorporating this invention;
FIGURE 3 is a block diagram of a two-dimensional space filter shown in FIGURE 2; and
FIGURE 4 illustrates the application of the invention to data samples located at the intersections of rectilinear coordinates.

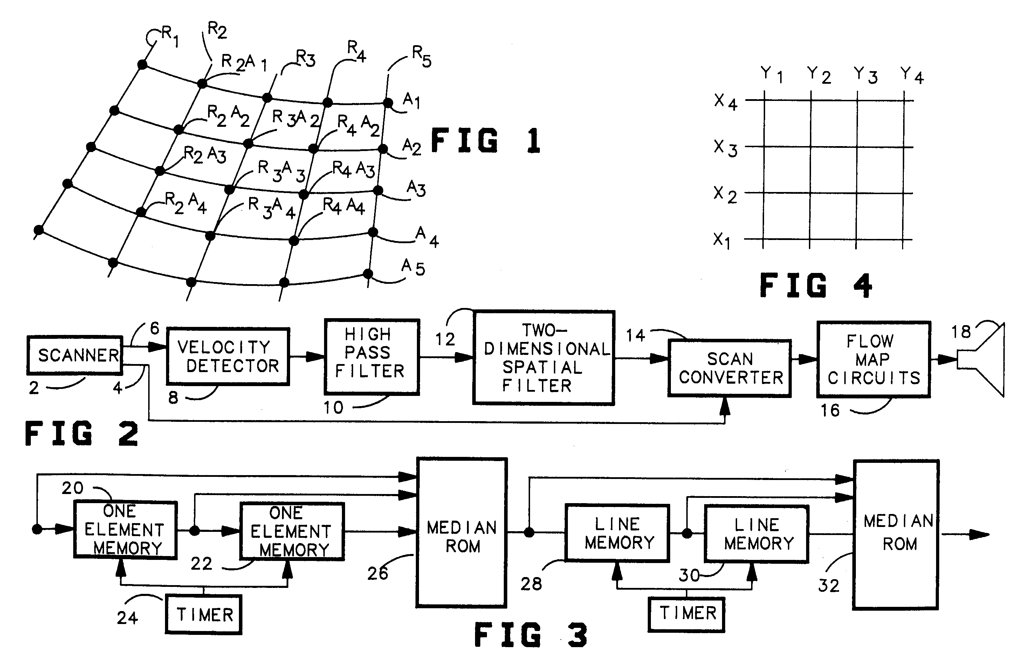

Reference is made to FIGURE 1 which illustrates a group of radial coordinates R₁ through R₅ respectively intersecting arc coordinates A₁ through A₅. In a simple application of the invention, the median of data values at intersections R₂A₂, R₂A₃ and R₂A₄ is selected. The same is done for the data values at the intersections R₃A₂, R₃A₃ and R₃A₄; and also for the data values at the intersections R₄A₂, R₄A₃ and R₄A₄. Thus the median value of the selected median values is used as the display data value at the central intersection.

FIGURE 2 illustrates the application of this invention to ultrasound apparatus for super imposing a colored blood flow map on a monochrome image of the tissue within the body. Although not shown, a scanner 2 contains a plurality of transducers that cause a pulse of sinusoidal pressure variation to be launched into the body along each of a plurality of radial lines such as shown in FIGURE 1. Sampling of the analog signal produced by the transducers in response to reflections from targets along a radial line can produce brightness values at intersections such as illustrated in FIGURE 1 at an output 4. By successively launching several pulses along a radial line before launching a pulse along the next radial line, and by sampling the reflections of each pulse at appropriate times, signals from which velocity can be determined at the intersections of FIGURE 1 can be made to appear at an output 6. A velocity detector 8 connected to the output 6 determines the velocity data values at successive intersections along the radial line. Thus, for each intersection along the radial line, we have a signal representing brightness and a signal representing velocity. The procedure is carried out for each radial line in succession.

In order to eliminate the components of the velocity signal supplied by the detector 8 that result from slow moving structures within the body, such as the heart wall, the velocity signal is applied to a high pass filter 10.

In accordance with this invention, the output of the high pass filter 10 is applied to a two-dimensional spatial filter 12 that is illustrated in FIGURE 3. The filter 10 provides display velocity data values at the intersections along each radial line of FIGURE 1 in succession.

If it is desired to form the blood velocity map and the image of the body with a rectilinear raster, a scan converter 14 is coupled to the output of the two-dimensional spatial filter 10 and the output 4 of the scanner 2. By interpolation techniques described in U.S. Patent No. 4,471,449 issued on September 11, 1984 to Steven C Leavitt et al and entitled "Scan Conversion System", the display data values for velocity at the intersections of FIGURE 1 can be converted into velocity values for the pixels of the rectilinear raster. Similarly, the brightness values at the intersections of FIGURE 1 that appear at the output 4 of the scanner 2 can be converted into brightness values for the pixels of a rectilinear raster.

If it is desired to form a blood velocity map in color and superimpose it onto a monochrome image of the body structure flow map circuits 16, such as described in U.S. Patent Application Serial No. 748,531 that was filed on June 25, 1985 for David Lipschutz, entitled "Flow Mapping Apparatus", may be connected between the output of the scan converter 14 and a cathode ray tube 18.

Reference is now made to FIGURE 3 for a description of one form of the two-dimensional spatial filter 12 of FIGURE 2. The successive velocity data values at the output of the high pass filter 10 of FIGURE 2 are respectively for successive intersections along a radial line. They are applied to a shift register comprised of two sections 20 and 22 that are pulsed by a timer 24 at the rate at which data values occur. The input to the section 20, its output and the output of the section 22 are applied to a median ROM 26. The output of the ROM 26 is applied to the input of a shift register having two sections 28 and 30, each of which has a number of subsections equal to the number of intersections, such as shown in FIGURE 1, along each radial line. The input to the section 28, its output and the output of the section 30 are applied to a second median ROM 32. The desired velocity display values for each intersection of a sector appear at the output of the median ROM 32.

The operation of the two-dimensional spatial filter of FIGURE 3 is as follows. After the first three data values are applied to the input of the section 20, they all appear at the input of the median ROM 26, which selects the median value and provides it at its output. When the fourth data value arrives, the second, third and fourth data values are applied to the median ROM 26, which selects the one having the median value and supplies it to its output. Thus, at some point, the output of the ROM 26 is the median value of data values at the intersections R₂A₁, R₂A₂ and R₂A₃; and when the data value at R₂A₄ arrives, the output of the ROM 26 is the median value of the data values at the intersections R₂A₂, R₂A₃ and R₂A₄. After the data values for two radial lines have been received, the median data values for each intersection of one radial line are stored in the section 28 and the median data values for the intersections of the previously scanned radial line are in the section 30. Thus, when the first median data value is received from a new line, the median data values for the first intersections will be applied to the median ROM 32. Actually meaningful data values will not be attained for the first intersections on each line, but this is unimportant.

After the raw data values have been received for R₂ and R₃ and the median data value selected for each intersection therein, and the median data value for R₄A₂ has been selected and placed at the output of the ROM 26, the median data values for R₂A₂ and R₃A₃ will be applied to the ROM 32 and it will select the median value of these selected median values. When the median value of R₄A₃ is selected and appears at the output of ROM 26, the ROM 32 selects the median value of the selected data value at R₄A₃, R₃A₃ and R₂A₃. Thus, the median data values are selected for intersections along the radial lines and then the median data value that is to be used for display is selected from the selected median data values of intersections along an arc. Use of different circuitry would permit the reversal of this process, i.e., the median data values could be selected for intersections on arcs and the median data value of the selected median data values along each radius could be selected fo the display data value.

In the circuit of FIGURE 2, nine intersections form a field of data values that can affect the display data value for each intersection; but the field could be extended in one or both directions.

In the apparatus discussed, one set of coordinates includes arcs that are related to a radius and the other set of coordinates includes radial lines that are related to angle; but any sets of coordinates could be used, such as x and y coordinates of FIGURE 4. It can be seen that the intersection within the rectangular field defined by X₄Y₁, X₄Y₃, X₂Y₁ and X₂Y₃ correspond to the intersections within the field defined by ₂A₂, R₂A₄, R₄A₂ and R₄A₄ of FIGURE 1.

## Claims

1. Ultrasound apparatus for use in displaying parts of a human body comprising first filter means (10) **characterized** in that additional filter means are provided comprising first means (26) for respectively selecting the medians of blood velocity data values at the intersection of each of a plurality of coordinates (R₁,R₂,.....R₅) of a first type (R) with a plurality of coordinates (A₁,A₂...A₅) of a second type (A), and second means (32) for selecting the median of the selected data values as the blood velocity value to be used for display at an internal intersection of a coordinate of the first type (R) and a coordinate of the second type (A) to form a coloured blood flow map.

2. Apparatus according to claim 1, **characterized** in that there are an odd number of coordinates of each type (R,A) and the median of the selected blood velocity data values is to be used for the intersection of the central radial line of each type.

3. Apparatus according to claim 1 or 2, **characterized** in that said first means (26) comprises a ROM (26) the output of which is applied to the input of a shift register having two sections (28,30 ) connected in series, each of which has a number of subsections equal to the number of intersections, the input to the first (28) one of said two sections, its output and the output of the second section (30) are connected to a further ROM (32) forming said second means.

4. Apparatus according to claim 3, **characterized** in that the first median ROM (26) selects velocity data values having a value greater than a first number and less than a second number of the velocity data values at the intersection of each of a plurality of coordinates of the first type (R) with a plurality of coordinates of a second type (A), and in that the second median ROM (32) selects from the data values so selected a data value to be used for display purposes at an internal intersection of coordinates of the first and second type.

5. Apparatus according to one of the preceding claims, **characterized** in that positive velocity of blood flow is illustrated by one colour and negative velocity by another colour.

## Patentansprüche

1. Ultraschallvorrichtung zum Einsatz für das Darstellen von Teilen des menschlichen Körpers mit einer ersten Filtervorrichtung (10), dadurch **gekennzeichnet,** daß weitere Filtervorrichtungen mit ersten Mitteln (26) zum Auswählen der Mittelwerte von Blutgeschwindigskeitsdaten an den Schnittstellen je mehrerer Koordinaten (R₁, R₂, .......R₅) einer ersten Art (R) mit mehreren Koordinaten (A₁, A₂, .......A₅) einer zweiten Art (A) und zweite Mittel (32) zum Auswählen der Mittelwerte ausgewählter Daten als für die Anzeige zu verwendender Blutgeschwindigkeitswert an einer internen Schnittstelle einer Koordinate der ersten Art (R) und einer Koordinate der zweiten Art (A) vorgesehen sind, um eine farbige Blutstromkarte zu schaffen.

2. Vorrichtung nach Anspruch 1, dadurch **gekennzeichnet,** daß eine ungerade Anzahl von Koordinaten jeder Art (R, A) vorgesehen ist und daß der Mittelwert der ausgewählten Blutgeschwindigkeitsdatenwerte für den Schnitt mit der mittleren radialen Geraden jeder Koordinatenart zu verwenden ist.

3. Vorrichtung nach Anspruch 1 oder 2, dadurch **gekennzeichnet,** daß die ersten Mittel (26) einen ROM (26) aufweisen, dessen Ausgang auf den Eingang eines Schieberegisters mit zwei in Reihe verbundenen Abschnitten (28, 30) gegeben wird, von denen jeder Abschnitt eine Anzahl von Unterabschnitten hat, welche gleich der Anzahl der Schnittstellen ist, wobei der Eingang des ersten (28) der beiden Abschnitte, dessen Ausgang und der Ausgang des zweiten Abschnittes (30) an einen weiteren ROM (32) angeschlossen sind, der die zweiten Mittel bildet.

4. Vorrichtung nach Anspruch 3, dadurch **gekennzeichnet,** daß der erste ROM (26) Geschwindigkeitsdaten mit Werten größer als diejenigen einer ersten Anzahl und kleiner als diejenigen einer zweiten Anzahl der Geschwindigkeitsdatenwerte an den Schnittstellen je einer Vielzahl von Koordinaten der ersten Art (R) mit einer Vielzahl der Koordinaten der zweiten Art (A) auswählt und daß der zweite ROM (32) aus den so ausgewählten Datenwerten einen für Darstellungszwecke zu benutzenden Datenwert an einer internen Schnittstelle von Koordinaten der ersten und zweiten Art auswählt.

5. Vorrichtung nach einem der vorangehenden Ansprüche, dadurch **gekennzeichnet,** daß die positive Geschwindigkeit des Blutstromes mit einer Farbe und die negative Geschwindigkeit mit einer anderen Farbe dargestellt sind.

## Revendications

1. Appareil à ultrasons à utiliser pour visualiser des parties d'un corps humain, comprenant un premiers moyens de filtrage (10).
**caractérisé** en ce qu'il est prévu des moyens de filtrage additionnels comprenant un premier moyen (26) pour sélectionner respectivement les médianes des valeurs de données de vitesse du sang à l'intersection de chacune d'une série de coordonnées (R₁, R₂, ... R₅) d'un premier type (R) avec une série de coordonnées (A₁, A₂, ... A₅) d'un deuxième type (A), et un deuxième moyen (32) pour sélectionner la valeur médiane des valeurs de données sélectionnées en tant que valeurs de vitesse du sang à utiliser pour la visualisation à une intersection interne d'une coordonnée du premier type (R) et d'une coordonnée du deuxième type (A) pour former une carte colorée d'écoulement sanguin.

2. Appareil selon la revendication 1,
**caractérisé** en ce qu'il existe un nombre impair de coordonnées de chaque type (R, A) et la médiane des valeurs sélectionnées de données de vitesse du sang doit être utilisée pour l'intersection de l'axe central de chaque type.

3. Appareil selon la revendication 1 ou 2,
**caractérisé** en ce que ledit premier moyen (26) comprend une mémoire morte (26) dont la sortie est appliquée à l'entrée d'un registre à décalage comprenant deux sections (28, 30) reliées en série ,dont chacune comprend un nombre de sous-sections égal au nombre d'intersections, l'entrée dans la première (28) desdites deux sections, sa sortie et la sortie de la deuxième section (30) sont reliées à une autre mémoire morte (32) formant ledit deuxième moyen.

4. Appareil selon la revendication 3,
**caractérisé** en ce que la première mémoire morte (26) de médianes sélectionne des valeurs de données de vitesse dont la valeur est supérieure à un premier nombre et inférieure à un deuxième nombre des valeurs de données de vitesse à l'intersection de chacune d'une série de coordonnées du premier type (R) avec une série de coordonnées du deuxième type (A) et en ce que la deuxième mémoire morte (32) de médianes sélectionne parmi les valeurs de données ainsi sélectionnées une valeur de donnée à utiliser dans un but de visualisation à une intersection interne de coordonnées du premier et du deuxième type.

5. Appareil selon l'une des revendications précédentes,
**caractérisé** en ce qu'une vitesse positive de l'écoulement sanguin est illustrée par une couleur et une vitesse négative par une autre couleur.
